# EUROPÄISCHE PATENTSCHRIFT

(11) **EP 2 005 112 B1**
(45) Veröffentlichungstag und Bekanntmachung des Hinweises auf die Patenterteilung: **26.02.2014**
(21) Anmeldenummer: 06723968.1
(22) Anmeldetag: 03.04.2006
(51) Int. Cl.: G01C 15/00, G01S 17/02, G01S 17/89

(54) **Vorrichtung und Verfahren zum dreidimensionalen Erfassen eines Raumbereichs**
Apparatus and method for three-dimensional coverage of a spatial area
Dispositif et procédé d'acquisition tridimensionnelle d'une zone d'espace

(30) Priorität: 31.03.2006 DE 202006005643 U
(43) Veröffentlichungstag der Anmeldung: 24.12.2008
(73) Patentinhaber: FARO TECHNOLOGIES INC., Lake Mary, Florida 32746-6204 (US)
(72) Erfinder: BECKER, Reinhard, 71642 Ludwigsburg (DE)
(74) Vertreter: Patentanwälte Hosenthien-Held und Dr. Held
(86) Internationale Anmeldenummer: PCT/EP2006/003010
(87) Internationale Veröffentlichungsnummer: WO 2007/118478

(56) Entgegenhaltungen:
- EP-A- 1 347 267
- JP-A- 2003 156 330
- US-A1- 2002 059 042

## Beschreibung

Die vorliegende Erfindung betrifft eine Vorrichtung zum dreidimensionalen Erfassen eines Raumbereichs mit den Merkmalen des Oberbegriffs des Anspruches 1 und ein Verfahren mit den Merkmalen des Oberbegriffs des Anspruches 15.

Eine Vorrichtung mit einem Entfernungsmesser und einer Strahlschwenkeinheit sowie ein entsprechendes Verfahren sind aus DE 202 08 077 U1 bekannt. Diese Vorrichtung verwendet einen Laserstrahl, der mit Hilfe eines rotierenden Spiegels in unterschiedliche Raumrichtungen abgelenkt wird. Der Spiegel rotiert um eine horizontale Drehachse und ist gegenüber der Drehachse um etwa 45° geneigt, so dass der Laserstrahl einen vertikalen Flächenbereich überstreicht. Zusätzlich wird der Messkopf mit dem Sender, Empfänger und dem Drehspiegel um eine vertikale Achse gedreht. Damit kann die bekannte Vorrichtung einen Raumbereich nahezu vollständig abtasten. Lediglich nach unten hin ist der Laserstrahl durch das Gehäuse des Messkopfes und/oder die Aufstandsfläche beschränkt.

Mit der bekannten Vorrichtung lässt sich ein dreidimensionales Entfernungsabbild eines Raumes oder Raumbereichs aufnehmen. Bevorzugte Anwendungen für eine solche Vorrichtung sind bspw. die Vermessung von Tunnelröhren, Gebäuden, Denkmälern oder auch die Führung fahrerloser Transportsysteme. Auf Grund der erhaltenen Entfernungsinformationen lassen sich Abmessungen innerhalb des Raumes oder Raumbereichs auch nachträglich anhand der aufgenommenen Daten bestimmen. Die reinen Entfernungsdaten sind jedoch für einen visuellen Eindruck des aufgenommenen Raumbereichs ungünstig.

Aus diesem Grund bestimmt die bekannte Vorrichtung auch Intensitätswerte des Reflexionssignals, womit sich Intensitätsbilder erzeugen lassen, die in etwa mit einem Schwarzweißbild des Raums oder Raumbereichs vergleichbar sind. Obwohl sich hiermit bereits ein guter visueller Eindruck eines aufgenommenen Raumbereichs vermitteln lässt, besteht der Wunsch, die dreidimensionale Erfassung und Wiedergabe noch realitätsgetreuer zu machen.

Aus der EP 1 347 267 A1 sind Vorrichtungen der eingangs genannten Art bekannt, welche zusätzlich Bildaufnahmeeinheiten aufweisen. Die Bild aufnahmeeinheiten benutzen die gleiche Optik und Steuervorrichtung wie der Entfernungsmesser. Die Strahlschwenkeinheit weist einen horizontalen und einen vertikalen Antrieb auf.

In der JP 2003-156330 A wird eine Vorrichtung (ohne Strahlschwenkeinheit) für einen Einsatz in einem Flugzeug vorgeschlagen, parallel zum Entfernungsmesser eine Bildaufnahmeeinheit mit einem Zeilensensor als Bildsensor anzuordnen und die Messdaten mit den Daten weiterer Sensoren zusammenzufassen. Ein Zeilensensor besitzt eine Vielzahl von zellenförmig nebeneinander angeordneten Bildzellen.

Die US 202 /0059042 A1 schlägt vor, den aus Entfernungsmesser und Strahlschwenkeinheit bestehenden Scanner mit einer CCD-Videokamera als Bildaufnahmeeinheit zu kombinieren und dem Benutzer beide Darstellungen des Raumbereichs anzubieten.

Vor diesem Hintergrund ist es die Aufgabe der vorliegenden Erfindung, eine Vorrichtung und ein Verfahren der eingangs genannten Art weiterzubilden, um einen noch realistischeren und realitätsgetreueren Eindruck eines dreidimensional erfassten Raumbereichs zu erzeugen.

Diese Aufgabe wird erfindungsgemäß durch eine Vorrichtung mit den Merkmalen des Anspruches 1 und ein Verfahren mit den Merkmalen des Anspruches 15 gelöst.

In der erfindungsgemäßen Vorrichtung sind ein Enttfernungsmesser und eine Strahlschwenkeinheit mit einer Bildaufnahmeeinheit oder "Kamera", mit deren Hilfe ein "normales" Foto des Raumbereichs gemacht werden kann. Es handelt es sich um eine digitale Bildaufnahmeeinheit, so dass die Bilddaten in digitaler Form vorliegen und zusammen mit den typischerweise ebenfalls digitalen Entfernungsinformationen abgespeichert werden können.

Erfindungsgemäß ist die Bildaufnahmeeinheit mit der Strahlschwenkeinheit so gekoppelt, dass der von der Bildaufnahmeeinheit aufgenommene Raumbereich den Entfernungslnformationen des Entfernungsmessers passgenau zugeordnet werden kann. Damit können die Entfernungsinformationen des Entfernungsmessers sehr einfach und exakt mit den rein visuellen Bildinformationen der Bildaufnahmeeinheit in Übereinstimmung gebracht werden.

Man erhält durch die Kombination ein sehr realitätsgetreues Abbild des erfassten Raumbereichs, wie man es von fotografischen Aufnahmen gewohnt ist. Die Qualität eines solchen Abbildes ist höher als der optische Eindruck, der sich aus dem Intensitätsabbild des Entfernungsmessers ableiten lässt. Zusätzlich zu dem qualitativ hochwertigen optischen Abbild stellt die neue Vorrichtung jedoch auch die Entfernungsinformationen zu den Objektpunkten zur Verfügung, und sie bietet damit alle Vorteile und Einsatzmöglichkeiten, der bekannten Vorrichtung.

Auf Grund der hohen Bildqualität, die die neue Vorrichtung mit Hilfe der Bildaufnahmeeinheit bietet, lassen sich optische Details im Raumbereich besser erkennen und auswerten. Damit erschließen sich neue Anwendungsmöglichkeiten, wie z.B. eine dreidimensionale Aufnahme eines Unfall- oder Tatortes zur Dokumentation polizeilicher Ermittlungen.

Die Strahlschwenkeinheit weist einen ersten Drehantrieb auf, um das strahlförmige Sendesignal um eine erste, vorzugsweise vertikale Drehachse zu drehen.

Diese Ausgestaltung vereinfacht die Aufzeichnung eines Panoramabildes bzw. Rundumbildes des Raumbereichs mit Hilfe der neuen Bildaufnahmeeinheit. Damit ermöglicht diese Ausgestaltung eine sehr einfache Erfassung des Raumbereichs über einen 360°-Winkel im Azimut.

Die Bildaufnahmeeinheit weist einen Bildsensor mit einer Vielzahl von zellenförmig nebeneinander angeordneten Bildzellen (Pixeln) auf, die eine Bildzellenzeile bilden, wobei die Bildzellenzeile parallel zu der ersten Drehachse positionierbar ist.

Diese Ausgestaltung beinhaltet einerseits Realisierungen, bei denen die Bildaufnahmeeinheit in einer festen Position zu dem Entfernungsmesser angeordnet ist, als auch Realisierungen, bei denen die Bildaufnahmeeinheit verschwenkbar oder anderweitig variabel in Bezug auf den Entfernungsmesser ist. Dementsprechend kann die Bildzellenzeile dauerhaft parallel zu der ersten Drehachse sein, oder sie wird nur für die Bildaufnahme in eine solche Ausrichtung verschwenkt.

Der Bildsensor ist ein Zeilensensor. Zeilensensoren im Sinne dieser Ausgestaltung sind Bildsensoren, die lediglich über eine geringe Anzahl von Zeilen bzw. Spalten mit Bildzellen zur Aufnahme einer Bildinformation verfügen. Ein Zeilensensor für eine monochrome Bildaufnahme (schwarzweiß) besitzt lediglich eine einzige Zeile bzw. Spalte von Bildzellen.

Ein bevorzugter Zeilensensor zur Aufnahme eines farbigen Abbildes des Raumbereichs besitzt hingegen drei zueinander parallele Bildzellenzeilen, wobei eine erste Bildzellenzeile zur Aufnahme einer ersten Farbkomponente (z.B. rot), eine zweite Bildzellenzeile zur Aufnahme einer zweiten Farbkomponente (z.B. grün) und eine dritte Bildzellenzeile zur Aufnahme einer dritten Farbkomponente (z.B. blau) vorgesehen ist.

Diese Ausgestaltungen ermöglichen eine besonders kostengünstige Realisierung. Außerdem können die Bildinformationen der Bildaufnahmeeinheit in dieser Ausgestaltung sehr einfach und schnell ausgelesen und den Entfernungsinformationen des Entfernungsmessers zugeordnet werden. Des weiteren trägt diese Ausgestaltung dazu bei, die Größe der Bilddateien zu reduzieren, ohne Einbußen bei der Bildqualität in Kauf zu nehmen.

Der Bildsensor besitzt mehrere zueinander parallele Bildzellenzeilen zur Aufnahme unterschiedlicher Farbkomponenten, wobei die parallelen Bildzellenzeilen jeweils in einem definierten Abstand zueinander angeordnet sind, und wobei der erste Drehantrieb eine Drehgeschwindigkeit besitzt, die an den definierten Abstand angepasst ist bzw. wird, so dass jede der parallelen Bildzellenzeilen dieselben Objektpunkte aufnimmt.

Diese Ausgestaltung ist besonders vorteilhaft in Verbindung mit einem Bildsensor, der drei parallele Bildzellenzeilen zur Aufnahme von drei verschiedenen Farbkomponenten bzw. verschiedenfarbigen Zeilenbildern besitzt, insbesondere zur Aufnahme eines roten, eines grünen und eines blauen Zeilenabbildes des Raumbereichs. Mit dieser Ausgestaltung, die ein farbiges optisches Abbild des Raumbereichs aufzeichnet, wird eine noch realitätsnähere Erfassung des Raumbereichs erreicht. Einzelne Details innerhalb des Raumbereichs lassen sich noch genauer anhand der erfassten Bildinformationen beurteilen.

Mit der angepassten Drehgeschwindigkeit des ersten Drehantriebs wird erreicht, dass die drei Farbbilder sehr einfach und vor allem passgenau übereinander gelegt werden können, um auf diese Weise ein "buntes" Abbild des Raumbereichs zu erhalten. Besonders bevorzugt ist es in dieser Ausgestaltung, wenn die Drehgeschwindigkeit des ersten Drehantriebes in Abhängigkeit von dem Abstand der Bildzellenzeilen, der vorhandenen oder eingestellten Zeilenauflösung bei der Bildaufnahme und/oder in Abhängigkeit von der Belichtungszeit, die für eine einzelne Zeilenaufnahme benötigt wird, einstellbar ist, weil sich in dieser Ausgestaltung eine optimale Bildqualität in Abhängigkeit von der Umgebungssituation erreichen lässt.

Insgesamt bietet die neue Vorrichtung eine kostengünstige Möglichkeit, um einen Raumbereich mit einer hohen Detailtreue dreidimensional zu erfassen und realistisch wiederzugeben. Die oben genannte Aufgabe ist daher vollständig gelöst.

In einer bevorzugten Ausgestaltung ist die Bildaufnahmeeinheit dazu ausgebildet, ein thermisches Abbild des Raumbereichs oder auch ein Abbild des Raumbereichs in anderen Wellenlängenbereichen aufzuzeichnen.

In dieser Ausgestaltung besitzt die Bildaufnahmeeinheit insbesondere die Fähigkeit, ein Infrarotabbild des Raumbereichs aufzuzeichnen. Damit lassen sich weitere Eigenschaften des Raumbereichs erfassen und für eine spätere Auswertung dokumentieren. Der Einsatzbereich der neuen Vorrichtung wird in vorteilhafter Weise noch weiter vergrößert.

In einer weiteren Ausgestaltung ist die Auswerte- und Steuereinheit dazu ausgebildet, ein Graustufenabbild des Raumbereichs anhand von Signalamplituden des Reflexionssignals zu bestimmen.

Diese Ausgestaltung ist für sich genommen auch schon bei der bekannten Vorrichtung realisiert. Sie besitzt in Kombination mit der vorliegenden Erfindung den besonderen Vorteil, dass sich die Bildinformationen, die mit der Bildaufnahmeeinheit aufgenommen wurden, mit den "Bildinformationen" des Entfernungsmessers vergleichen lassen, um weitere Rückschlüsse über die Eigenschaften des erfassten Raumbereichs zu erhalten. Insbesondere können durch einen Vergleich eines farbigen optischen Abbildes mit dem Graustufenbild des Entfernungsmessers Rückschlüsse auf die Reflexionseigenschaften und damit Rückschlüsse auf Materialeigenschaften von Objekten in dem Raumbereich getroffen werden. In einer weiteren bevorzugten Ausgestaltung ist die Auswerte- und Steuereinheit ferner dazu ausgebildet, das Graustufenabbild und das Abbild der Bildaufnahmeeinheit passgenau (und vorzugsweise vollständig, d.h. für jeden Messpunkt des Entfernungsmessers) zu überlagern.

Mit dieser Ausgestaltung kann das optische Abbild des Raumbereichs, das mit der Bildaufnahmeeinheit aufgenommen wurde, sehr einfach und exakt den Entfernungsinformationen, die mit dem Entfernungsmesser bestimmt wurden, zugeordnet werden. Insbesondere ermöglicht es diese Ausgestaltung, das Graustufenbild, in dem jedem Bildpunkt eine Entfernungsinformation zugeordnet ist, mit dem optischen Abbild der Bildaufnahmeeinheit "einzufärben", um ein äußerst realitätsgetreues Abbild mit zusätzlichen Entfernungsinformationen zu jedem Objektpunkt zu erhalten.

In einer weiteren Ausgestaltung weist die Strahlschwenkeinheit einen zweiten Drehantrieb auf, um das Sendesignal um eine zweite, vorzugsweise horizontale Drehachse zu drehen.

Diese Ausgestaltung ermöglicht eine nahezu vollständige Erfassung eines Raumbereichs im Azimut und in der Elevation auf eine sehr einfache Weise.

In einer weiteren Ausgestaltung ist die Bildzellenzeile senkrecht zu der zweiten Drehachse positionierbar.

Diese Ausgestaltung ist von Vorteil, weil sich die seriell ausgelesenen Bildzellen sehr gut zu den Objektpunkten zuordnen lassen, die mit einem um die zweite Drehachse gedrehten Sendesignal abgetastet werden.

In einer weiteren Ausgestaltung definieren die erste und die zweite Drehachse einen Achsenschnittpunkt, und die Bildaufnahmeeinheit besitzt eine optische Achse, die zumindest wahlweise im Bereich des Achsenschnittpunktes positionierbar ist. Vorzugsweise ist die Bildaufnahmeeinheit so positionierbar, dass ihre optische Achse durch den Achsenschnittpunkt der beiden Drehachsen verläuft.

Mit dieser Ausgestaltung wird eine Parallaxe zwischen dem Blickwinkel der Bildaufnahmeeinheit und dem Blickwinkel des Entfernungsmessers reduziert oder gar minimiert. Daher lassen sich mit dieser Ausgestaltung die Entfernungsinformationen und die Bildinformationen noch einfacher und exakter zuordnen. Parallaxenfehler lassen sich besser vermeiden.

In einer weiteren Ausgestaltung beinhaltet die Vorrichtung einen in der Höhe verstellbaren Ständer mit einer Höhenskalierung zum genauen Positionieren der Bildaufnahmeeinheit.

Die erfindungsgemäße Kombination der Bildaufnahmeeinheit mit dem Entfernungsmesser ist in der praktischen Realisierung insofern schwierig, weil die Bildaufnahmeeinheit den Sichtbereich des Entfernungsmessers beeinträchtigen kann. Dies gilt in besonderem Maße, wenn die Bildaufnahmeeinheit mit ihrer optischen Achse in den Bereich des Achsenschnittpunktes gebracht werden soll. Die bevorzugte Ausgestaltung ermöglicht es, die Bildaufnahmeeinheit oberhalb oder unterhalb des Achsenschnittpunktes anzuordnen. Mit Hilfe der Höhenskalierung kann die Abweichung ausgeglichen werden, indem man zunächst in einem ersten Durchgang das Entfernungsabbild ohne Bildaufnahmeeinheit aufnimmt und anschließend in einem zweiten Durchgang das optische Abbild aufzeichnet, wobei der Ständer (z.B: ein dreibeiniges Stativ oder eine höhenverstellbare Säule) zwischen den beiden Durchgängen genau so weit abgesenkt oder angehoben wird, dass die Bildaufnahmeeinheit in den Achsschnittpunkt der Drehachsen des ersten Durchlauf gelangt. Die Ausgestaltung ist eine sehr einfache und kostengünstige Möglichkeit, um die Bildaufnahmeeinheit und den Entfernungsmesser in einer Vorrichtung zu kombinieren.

In einer weiteren Ausgestaltung beinhaltet die Strahlschwenkeinheit einen Drehspiegel, der dazu ausgebildet ist, das Sendesignal in verschiedene Raumrichtungen umzulenken, wobei die Bildaufnahmeeinheit zumindest wahlweise im Bereich des Drehspiegels positionierbar ist.

Diese Ausgestaltung ist eine besonders elegante Möglichkeit, um eine Bildaufnahmeeinheit in eine Vorrichtung der eingangs beschriebenen Art zu integrieren. Dadurch, dass die Bildaufnahmeeinheit im Bereich des Drehspiegels positionierbar ist, können Parallaxenfehler auf sehr einfache Weise auf ein Minimum reduziert werden.

In einer weiteren Ausgestaltung besitzt die Vorrichtung eine Gehäusestruktur mit zumindest zwei voneinander getrennten Gehäuseteilen, und sie besitzt einen Halter für die Bildaufnahmeeinheit, der lösbar mit zumindest einem Gehäuseteil verbunden ist.

Diese Ausgestaltung ermöglicht es, die neue Vorrichtung wahlweise mit oder ohne Bildaufnahmeeinheit zu betreiben, so dass die Bildaufnahmeeinheit optional verwendet werden kann. Des Weiteren lassen sich ältere Vorrichtungen mit dieser Ausgestaltung sehr einfach mit der neuen Bildaufnahmeeinheit nachrüsten.

In einer weiteren Ausgestaltung weist der Halter einen verschwenkbaren Arm auf, an dem die Bildaufnahmeeinheit angeordnet ist, und zwar vorzugsweise ebenfalls lösbar.

Diese Ausgestaltung hat sich in praktischen Ausführungsbeispielen als eine sehr einfache und robuste Möglichkeit erwiesen, die sowohl eine einfache Bedienung als auch eine hohe Genauigkeit bei der Überlagerung bzw. Zuordnung der Bildinformationen und Entfernungsinformationen ermöglicht.

In einer weiteren Ausgestaltung weist der Halter eine in etwa U-förmige Klammer auf, um den Halter auf das zumindest eine Gehäuseteil aufzustecken.

Diese Ausgestaltung hat sich als sehr einfache und vorteilhafte Lösung erwiesen, um vorhandene Vorrichtungen mit der neuen Bildaufnahmeeinheit nachzurüsten.

In einer weiteren Ausgestaltung ist die Bildaufnahmeeinheit mit Hilfe des Halters in eine Ebene verschwenkbar, die zwischen den zumindest zwei Gehäuseteilen liegt. Vorzugsweise verläuft auch die Drehachse des ersten Drehantriebs in dieser Ebene, so dass der Bildsensor mit dem Halter in etwa deckungsgleich zu der Drehachse positionierbar ist.

Diese Ausgestaltung besitzt den Vorteil, dass die Bildaufnahmeeinheit einerseits sehr nah an das Zentrum der neuen Vorrichtung herangebracht werden kann, das üblicherweise den Koordinatenursprung für den Entfernungsmesser definiert. Andererseits kann die Bildaufnahmeeinheit auch einfach aus diesem Bereich herausgeschwenkt werden, wodurch der Entfernungsmesser eine weitgehend freie Sicht auf die Objektpunkte des Raumbereichs erhält. Diese Ausgestaltung kombiniert daher einen relativ einfachen, kostengünstigen und robusten Aufbau mit der Möglichkeit, die Bildaufnahmeeinheit nahezu optimal im Zentrum der neuen Vorrichtung zu platzieren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein bevorzugtes Ausführungsbeispiel der neuen Vorrichtung in einer vereinfachten, teilweise geschnittenen Darstellung,
- Fig. 2: eine Detailansicht der Vorrichtung aus Fig. 1 mit der Bildaufnahmeeinheit, die über einen Halter an einem Gehäuseteil der Vorrichtung befestigt ist,
- Fig. 3: eine vereinfachte, schematische Darstellung der neuen Bildaufnahmeeinheit, und
- Fig. 4: die Vorrichtung aus Fig. 1 in einer zweiten Betriebsposition.

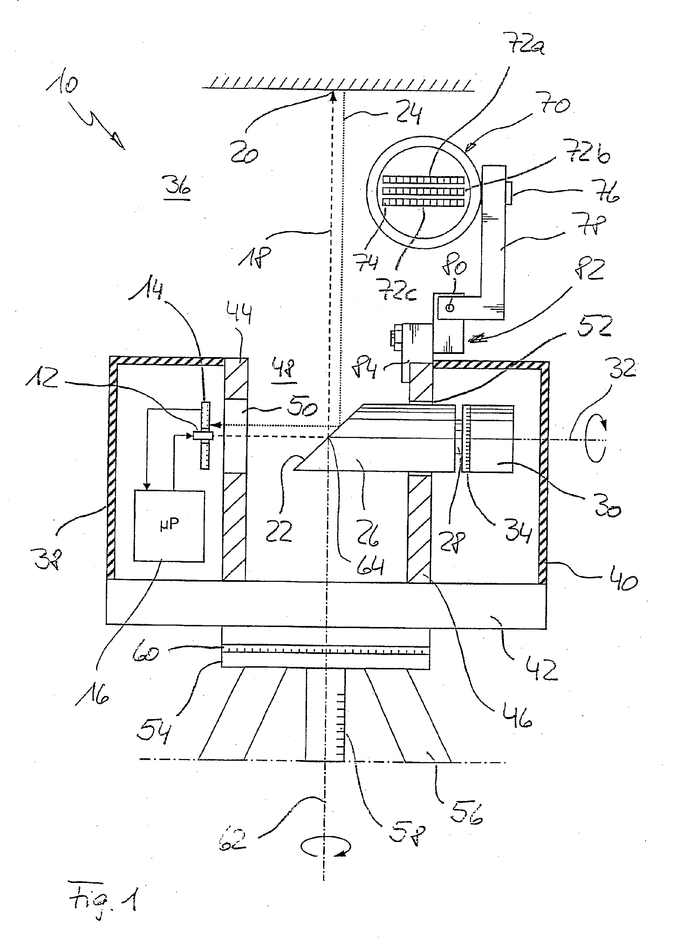

In den Figuren 1 bis 4 ist ein bevorzugtes Ausführungsbeispiel der neuen Vorrichtung in seiner Gesamtheit mit der Bezugsziffer 10 bezeichnet.

Die Vorrichtung 10 beinhaltet einen Sender 12 und einen Empfänger 14, die beide mit einer Auswerte- und Steuereinheit 16 verbunden sind. In dem bevorzugten Ausführungsbeispiel beinhaltet der Sender 12 eine Laserdiode, die dazu ausgebildet ist, einen Laserstrahl 18 auszusenden, um einen Objektpunkt 20 im Raumbereich zu beleuchten. Typischerweise ist der Laserstrahl 18 moduliert. Die Erfindung ist jedoch nicht auf solche Arten von Entfernungsmessern beschränkt. Bspw. könnte das Sendesignal auch ein Ultraschallsignal oder ein anderes optisches oder elektromagnetisches Signal sein.

Der Laserstrahl 18 wird in diesem Ausführungsbeispiel über einen Spiegel 22 zu dem Objektpunkt 20 umgelenkt. Mit der Bezugsziffer 24 ist ein reflektierter Strahl bezeichnet, der von dem Objektpunkt 20 reflektiert wird und über den Spiegel 22 zum Empfänger 14 umgelenkt wird. Die Auswerte- und Steuereinheit 16 ist hier in der Lage, die Entfernung der Vorrichtung 10 zu dem Objektpunkt 20 aus der Laufzeit des ausgesendeten Laserstrahls 18 und des empfangenen reflektierten Strahls 24 zu bestimmen. Hierzu wird die zeitliche Differenz zwischen den beiden Signalen anhand von Phasenlagen und/oder Impulsen ausgewertet. Dementsprechend bilden der Sender 12, der Empfänger 14 und die Auswerte- und Steuereinheit 16 einen Entfernungsmesser.

Der Spiegel 22 ist hier an der vorderen Stirnfläche eines Zylinders 26 ausgebildet, der über eine Welle 28 mit einem Drehantrieb 30 verbunden ist. Mit Hilfe des Drehantriebes 30 kann der Spiegel 22 um eine Drehachse 32 gedreht werden. Die jeweilige Drehstellung des Spiegels 22 lässt sich mit Hilfe eines Encoders 34 bestimmen. Die Ausgangssignale des Encoders 34 sind ebenfalls der Auswerte- und Steuereinheit 16 zugeführt (hier aus Gründen der Übersichtlichkeit nicht dargestellt).

In dem bevorzugten Ausführungsbeispiel ist die Drehachse 32 horizontal angeordnet und der Spiegel 22 ist gegenüber der Drehachse 32 in einem Winkel von etwa 45° geneigt. Eine Drehung des Spiegels 22 um die Horizontalachse 32 hat damit zur Folge, dass der Laserstrahl 18 entlang einer Vertikalebene abgelenkt wird, die senkrecht zu der Drehachse 32 steht. Der Laserstrahl 18 bildet gewissermaßen einen Fächer, mit dem der Raumbereich 36 in einer Vertikalebene abgetastet wird.

Die Vorrichtung 10 besitzt in diesem Ausführungsbeispiel eine Gehäusestruktur, die im Wesentlichen zwei Gehäuseteile 38, 40 aufweist, die auf einer gemeinsamen Grundplatte 42 angeordnet sind. In dem in Fig. 1 linken Gehäuseteil 38 sind der Sender 12, der Empfänger 14 und die Auswerte- und Steuereinheit 16 untergebracht. Der in Fig. 1 rechte Gehäuseteil 40 beherbergt den Drehantrieb 30 mit dem Encoder 34 und dem Zylinder 26, wobei der Zylinder 26 mit dem Spiegel 22 aus dem Gehäuseteil 40 herausragt, so dass der Spiegel 22 etwa mittig zwischen den beiden Gehäuseteilen 38, 40 angeordnet ist. In dem bevorzugten Ausführungsbeispiel besitzen die beiden Gehäuseteile 38, 40 jeweils eine verstärkte Seitenwand 44 bzw. 46, die parallel zueinander gegenüberstehen und den Zwischenraum 48 zwischen den Gehäuseteilen 38, 40 begrenzen. Die Seitenwand 44 besitzt eine Öffnung 50, durch die der Laserstrahl 18 aus dem Gehäuseteil 38 nach außen treten kann und der reflektierte Strahl 24 wieder in das Gehäuseteil 38 eintreten kann. Die Öffnung 50 ist in bevorzugten Ausführungsbeispielen der Erfindung mit einem Fenster verschlossen, um das Eindringen von Schmutz in das Gehäuseteil 38 zu verhindern.

Die Gehäusewand 46 besitzt eine Öffnung 52, durch die der Zylinder 26 in den Zwischenraum 48 hineinragt. In den bevorzugten Ausführungsbeispielen der Erfindung bilden die Seitenwände 44, 46 die tragenden Teile der Gehäusestruktur, die fest mit der Grundplatte 42 verbunden sind, während die Gehäuseteile 38, 40 von der Grundplatte 42 bzw. den Seitenwänden 44, 46 entfernt werden können.

Die Grundplatte 42 ist auf einem Drehantrieb 54 angeordnet, der seinerseits auf einem Stativ 56 sitzt. Das Stativ 56 ist in der Höhe verstellbar und besitzt eine Skalierung 58, um eine exakte und reproduzierbare Höheneinstellung vornehmen zu können. Mit der Bezugsziffer 60 ist ein Encoder bezeichnet, mit dessen Hilfe sich die Drehposition des Drehantriebes 54 bestimmen lässt. Die Ausgangssignale des Encoders 60 sind ebenfalls der Auswerte- und Steuereinheit 16 zugeführt (hier nicht dargestellt).

Der Drehantrieb 54 ermöglicht eine Drehung der Vorrichtung 10 um eine vertikale Drehachse 62, die zusammen mit der Drehachse 32 einen Achsenschnittpunkt 64 definiert. Der Achsenschnittpunkt 64 liegt in etwa mittig auf dem Spiegel 22 und definiert in bevorzugten Ausführungsbeispielen der Erfindung den Ursprung eines Koordinatensystems, auf das sämtliche Entfernungsmesswerte des Entfernungsmessers bezogen sind. In dem bevorzugten Ausführungsbeispiel liegt der Achsenschnittpunkt 64 etwa mittig in dem Zwischenraum 48 zwischen den Seitenwänden 44, 46.

Mit Hilfe des Drehantriebes 54 kann der "Abtastfächer", der mit Hilfe des Drehantriebes 30 erzeugt wird, um bis zu 360° im Azimut gedreht werden. Damit kann der Laserstrahl 18 nahezu jeden Objektpunkt 20 in der Umgebung der Vorrichtung 10 beleuchten. Eine Abschattung findet lediglich nach unten hin durch die Grundplatte 42 statt, so dass der Blickwinkel des Entfernungsmessers nach unten hin auf etwa 70° gegenüber der Vertikalen begrenzt ist.

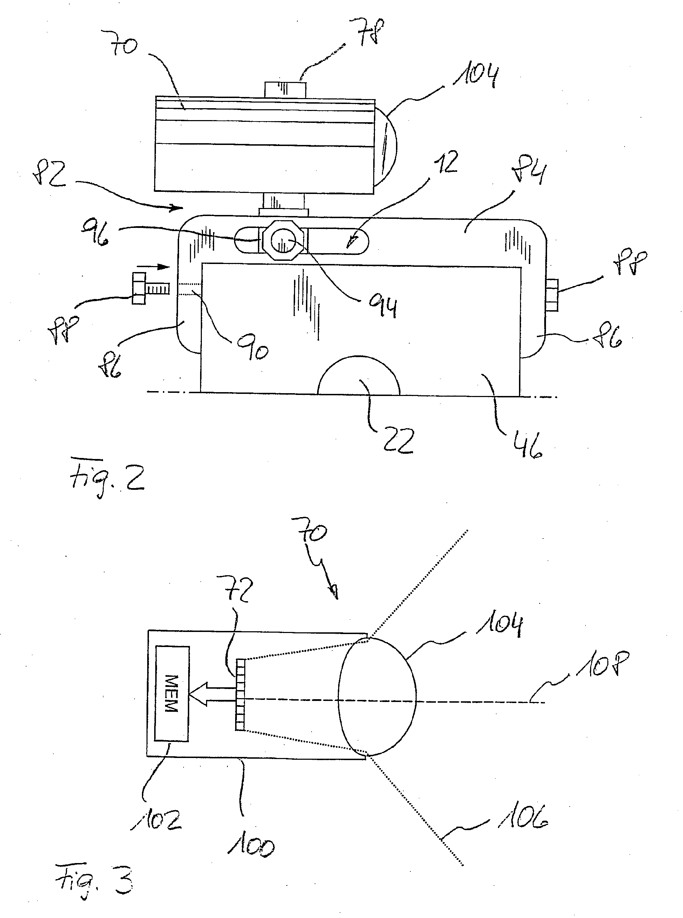

Mit der Bezugsziffer 70 ist eine Bildaufnahmeeinheit bezeichnet, die in diesem Ausführungsbeispiel einen Zeilensensor 72 mit einer Vielzahl von zeilenförmig nebeneinander angeordneten Bildzellen 74 besitzt. In dem bevorzugten Ausführungsbeispiel besitzt der Zeilensensor 72 drei parallel nebeneinander angeordnete Bildzellenzeilen 72a, 72b, 72c, die mit einem relativen Abstand zueinander angeordnet sind, der etwa der Breite von drei bis zehn Bildzellen 74 entspricht (hier nicht maßstabsgetreu dargestellt). Über jeder Bildzellenzeile 72a, 72b, 72c ist ein anderes Farbfilter (hier nicht dargestellt) angeordnet, so dass die Bildzellenzeilen 72a, 72b, 72c verschiedenfarbige Zeilenbilder aufnehmen, die zusammen ein RGB-Farbzeilenbild ergeben. Weitere Details der Bildaufnahmeeinheit 70 sind weiter unten anhand Fig. 3 beschrieben.

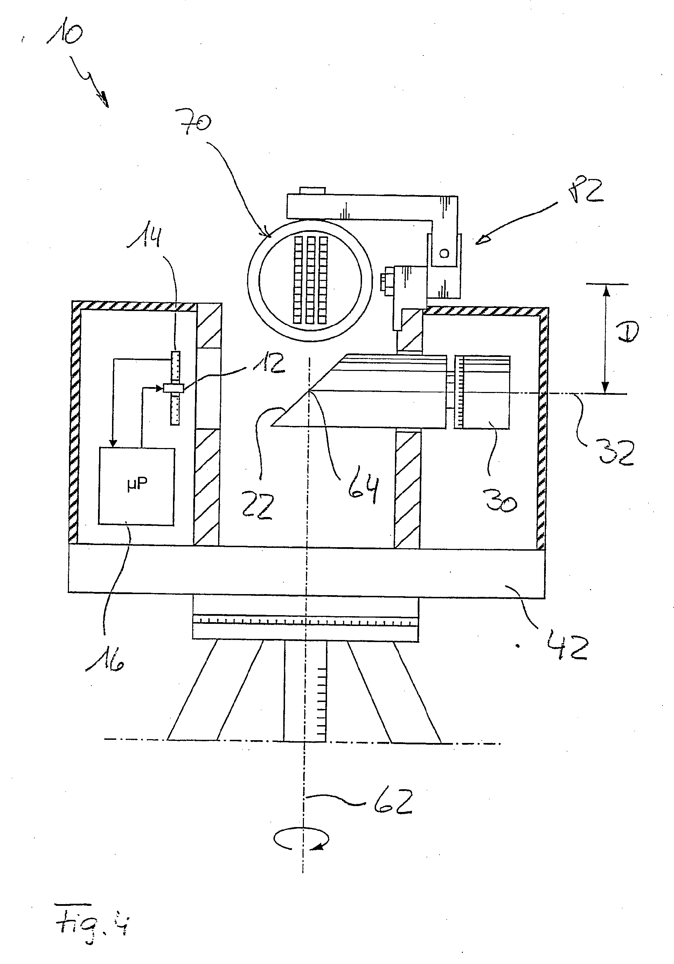

Die Bildaufnahmeeinheit 70 ist hier über einen Zapfen 76 lösbar an einem Schwenkarm 78 befestigt. Der Schwenkarm 78 ist L-förmig ausgebildet, wobei die Bildaufnahmeeinheit 70 an einem ersten Schenkel des Schwenkarms 78 angeordnet ist. Der zweite Schenkel des Schwenkarms 78 ist mit einem Zapfen 80 an einem Halter 82 verschwenkbar gelagert. Fig. 1 zeigt die Bildaufnahmeeinheit 70 in einer ersten Schwenkposition des Schwenkarms 78. Fig. 4 zeigt die Bildaufnahmeeinheit 70 in einer zweiten Schwenkposition, wobei die Bildaufnahmeeinheit 70 hier zumindest teilweise in den Zwischenraum 48 zwischen den Seitenwänden 44, 46 hineinragt.

Fig. 2 zeigt den Halter 82 mit der Bildaufnahmeeinheit 70 in einer seitlichen Ansicht auf die Seitenwand 46. Wie man hier erkennen kann, beinhaltet der Halter 82 eine etwa U-förmige Klammer 84, die von oben auf die Seitenwand 46 aufgeschoben ist. Die seitlichen Schenkel 86 der Klammer 84 umgreifen den oberen Bereich der Seitenwand 46. Sie sind mit Hilfe von Klemmschrauben 88 fixiert, die in entsprechende Bohrungen 90 an der Klammer 84 und - in bevorzugten Ausführungsbeispielen - in der Seitenwand 46 eingreifen. Durch Lösen der Schrauben 88 kann die Klammer 84 nach oben von der Seitenwand 46 abgezogen werden, so dass der gesamte Halter 82 mit der Bildaufnahmeeinheit 70 von der verbleibenden Vorrichtung 10 getrennt werden kann.

Die Klammer 84 besitzt einen Schlitz 92, durch den ein Zapfen 94 ragt, der über ein Zwischenteil 96 mit dem Schwenkarm 78 verbunden ist. Der Zapfen 94 ist über eine Mutter an der Klammer 84 fixiert.

Die Bildaufnahmeeinheit 70 besitzt hier einen Tubus 100, in dem der Zeilensensor 72 angeordnet ist. Des Weiteren ist ein Speicher 102 in dem Tubus 100 untergebracht, in dem die Bilddaten des Zeilensensors 72 zwischengespeichert werden. Der Speicher 102 ist mit der Auswerte- und Steuereinheit 16 verbunden (hier nicht dargestellt).

Die Bildaufnahmeeinheit 70 besitzt in diesem Ausführungsbeispiel eine Optik mit einem sog. Fisheye-Objektiv 104, das einen sehr großen Bildaufnahmebereich 106 ermöglicht. In einem bevorzugten Ausführungsbeispiel reicht der Bildaufnahmebereich 106 von etwa -70° bis etwa +70° bezogen auf die optische Achse 108 der Bildaufnahmeeinheit 70. Der Zeilensensor 72 besitzt in dem bevorzugten Ausführungsbeispiel eine Auflösung von etwa 5000 Bildpunkten.

Fig. 1 zeigt die Bildaufnahmeeinheit 70 in einer Schwenkposition, die eine störungsfreie Entfernungsmessung mit der Vorrichtung 10 in einem ersten Datenerfassungsdurchgang ermöglicht. In diesem ersten Durchgang wird der Spiegel 22 um die Drehachse 32 gedreht, während die Vorrichtung 10 um die Hochachse 62 gedreht wird. Gleichzeitig sendet der Sender 12 den modulierten Laserstrahl 18 aus, der auf Grund der beiden Drehbewegungen den Raumbereich 36 um die Vorrichtung 10 herum abtastet. Mit Hilfe des reflektierten Strahls 24 und der Winkelpositionen der Drehantriebe 30, 54, die mit den Encodern 34, 60 bestimmt werden, bestimmt die Auswerte- und Steuereinheit 16 zu jedem Objektpunkt 20 die Entfernung bezogen auf den Achsenschnittpunkt 64. Außerdem wertet die Auswerte- und Steuereinheit 16 die Amplitude der reflektierten Strahlen 24 zu jedem Objektpunkt 20 aus, um ein Intensitätsabbild bzw. ein Graustufenabbild des Raumbereichs 36 zu erzeugen.

Nachdem die Vorrichtung 10 den interessierenden Raumbereich 36 mit Hilfe des Entfernungsmessers 12, 14, 16 erfasst hat, wird der Sender 12 abgeschaltet. Die Bildaufnahmeeinheit 70 wird mit Hilfe des Halters 82 in die in Fig. 4 dargestellte Position gebracht. Wie dort dargestellt ist, ist der Halter 82 so ausgebildet, dass der Zeilensensor 72 in dieser Position parallel zu der Drehachse 62 und in etwa mittig und deckungsgleich dazu positioniert wird. Die optische Achse 108 ist dann mit der Drehachse 62 ausgerichtet, schneidet diese jedoch unter einem rechten Winkel. Allerdings sitzt die Bildaufnahmeeinheit 70 hier noch etwas höher als der Achsenschnittpunkt 64 bei der Erfassung der Entfernungswerte war. Daher wird die gesamte Vorrichtung 10 in den bevorzugten Ausführungsbeispielen der Erfindung mit Hilfe des Stativs 56 nach unten bewegt, und zwar um die Distanz D, die in etwa dem vertikalen Abstand der optischen Achse 108 zum Achsenschnittpunkt 64 entspricht. Anschließend wird die Vorrichtung 10 mit Hilfe des Drehantriebes 54 ein zweites Mal umlaufend bewegt, wobei die Bildaufnahmeeinheit 70 den umgebenden Raumbereich 36 zeilenweise abtastet und aufnimmt. Die Bilddaten aus dem Zeilensensor 72 werden im Zwischenspeicher 102 zwischengespeichert und der Auswerte- und Steuereinheit 16 zugeführt. Die Auswerte- und Steuereinheit 16 kann dann die Daten des Entfernungsmessers und die Bilddaten der Bildaufnahmeeinheit 70 passgenau und vor allem in Bezug auf alle Bildpunkt (vollständig) überlagern, weil Parallaxenfehler zwischen dem Entfernungsmesser und der Bildaufnahmeeinheit vermieden sind. In besonders bevorzugten Ausführungsbeispielen der Erfindung ist die Auswerte- und Steuereinheit 16 dazu ausgebildet, das Graustufenbild des Entfernungsmessers und das zeilenweise aufgenommene Abbild aus der Bildaufnahmeeinheit automatisch zu überlagern, wobei die Informationen der Encoder 34, 60 verwendet werden. Vorzugsweise wird die Position der Bildaufnahmeeinheit 70 für diesen Zweck vorher anhand eines definierten Testbildes kalibriert.

Alternativ hierzu erfolgt die Überlagerung und Zuordnung der Bilddaten und der Daten des Entfernungsmessers, indem die Bilddaten und das Graustufenbild des Entfernungsmessers - ggf. unter manueller Nachbearbeitung - einander passgenau überlagert werden.

In bevorzugten Ausführungsbeispielen der Erfindung ist die Auswerte- und Steuereinheit 16 ein PC, der in dem Gehäuseteil 38 der Vorrichtung 10 untergebracht ist. Alternativ hierzu kann der Gehäuseteil 38 jedoch auch eine Vorstufe der Auswerte- und Steuereinheit 16 beinhalten, die im Wesentlichen eine digitale Signalaufbereitung durchführt. Die eigentliche Auswertung und vor allem die Überlagerung bzw. Zusammenführung der Bilddaten und der Daten des Entfernungsmessers kann dann in einem externen PC (hier nicht dargestellt) erfolgen, was den Vorteil besitzt, dass ein externer PC auf Grund des beschränkten Raumangebotes in der Vorrichtung 10 eine höhere Rechenleistung besitzen kann.

Der Drehantrieb 54 ist hier in der Lage, die Bildaufnahmeeinheit mit unterschiedlichen Drehgeschwindigkeiten zu drehen. In einer bevorzugten Ausgestaltung ist der Drehantrieb 54 mit der Auswerte- und Steuereinheit 16 gekoppelt (hier nicht dargestellt), die die Drehgeschwindigkeit des Antriebs 54 steuert. In einem bevorzugten Ausführungsbeispiel steuert die Auswerteund Steuereinheit 16 zunächst einen ersten Bildaufnahmeumlauf, um die Umgebungshelligkeit zu bestimmen. In Abhängigkeit davon stellt die Auswerte- und Steuereinheit 16 die Belichtungszeit und/oder Blende der angeschlossenen Bildaufnahmeeinheit 70 ein. Des weiteren bestimmt die Auswerte- und Steuereinheit 16 in Abhängigkeit von der Belichtungszeit/Blende und der eingestellten Zeilenauflösung (z.B. 3600 Zeilenbilder für einen 360° Umlauf) die optimale Drehgeschwindigkeit des Drehantriebs 54. Die Drehgeschwindigkeit wird so eingestellt, dass die parallelen Zeilensensoren 72a, 72b, 72c trotz ihres seitlichen Versatzes jeweils genau dieselben Objektpunkte aufnehmen, so dass zu jedem Objektpunkt drei Farbkomponenten zur Verfügung gestellt werden, die zusammen ein RGB-Farbzeilenbild ergeben. Der seitliche Abstand der drei Bildzellenzeilen wird also durch die Drehbewegung der Bildaufnahmeeinheit 70 ausgeglichen.

## Patentansprüche

1. Vorrichtung zum dreidimensionalen Erfassen eines Raumbereichs (36), mit
a) einem Entfernungsmesser zum Bestimmen einer Entfernung zu einem Objektpunkt (20) im Raumbereich (36), wobei der Entfernungsmesser einen Sender (12) zum Aussenden eines weitgehend strahlförmigen Sendesignals (18) zu dem Objektpunkt (20), einen Empfänger (14) zum Empfangen eines Reflexionssignals (24) von dem Objektpunkt (20) und eine Auswerte- und Steuereinheit (16) besitzt, die dazu ausgebildet ist, die Entfernung zu dem Objektpunkt (20) anhand des Sendesignals (18) und des Reflexionssignals (24) zu bestimmen,
b) einer Strahlschwenkeinheit (22, 30, 54), die dazu ausgebildet ist, das Sendesignal (18) in unterschiedliche Raumrichtungen zu richten, wobei die Strahlschwenkeinheit (22, 30, 54) einen ersten Drehantrieb (54) aufweist, um das strahlförmige Sendesignal (18) um eine erste, vorzugsweise vertikale Drehachse (62) zu drehen, und
c) einer Bildaufnahmeeinheit (70) zum Aufzeichnen eines Abbildes des Raumbereichs (36), wobei die Bildaufnahmeeinheit (70) einen definierten Bildaufnahmebereich (106) besitzt, und wobei die Bildaufnahmeeinheit (70) mit der Strahlschwenkeinheit (22, 30, 54) gekoppelt ist, um den Bildaufnahmebereich (106) und das Sendesignal (18) auf denselben Objektpunkt (20) auszurichten,
**dadurch gekennzeichnet, dass**
d) die Bildaufnahmeeinheit (70) einen Bildsensor (72) mit einer Vielzahl von zellenförmig nebeneinander angeordneten Bildzellen (74) aufweist, die eine Bildzellenzeile bilden, wobei der Bildsensor (72) ein Zeilensensor ist,
e) die Bildzellenzeile des Bildsensors (72) parallel zu der ersten Drehachse (62) positionierbar ist, und
f) der Bildsensor (72) mehrere zueinander parallele Bildzellenzeilen (72a, 72b, 72c) zur Aufnahme unterschiedlicher Farbkomponenten besitzt, wobei die parallelen Bildzellenzeilen (72a, 72b, 72c) jeweils in einem definierten Abstand zueinander angeordnet sind, und wobei der erste Drehantrieb (54) eine Drehgeschwindigkeit besitzt, die an den definierten Abstand derart angepasst ist, dass die Bildaufnahmeeinheit (70) über jede der parallelen Bildzellenzeilen (72a, 72b, 72c) denselben Objektpunkt (20) aufnimmt.

2. Vorrichtung nach Anspruch 1, **dadurch gekennzeichnet, dass** die Bildaufnahmeeinheit (70) dazu ausgebildet ist, ein farbiges optisches Abbild des Raumbereichs (36) aufzuzeichnen.

3. Vorrichtung nach Anspruch 1 oder 2, **dadurch gekennzeichnet, dass** die Bildaufnahmeeinheit (70) dazu ausgebildet ist, ein thermisches Abbild des Raumbereichs (36) aufzuzeichnen.

4. Vorrichtung nach einem der vorhergehenden Ansprüche, **dadurch gekennzeichnet, dass** die Auswerte- und Steuereinheit (16) ferner dazu ausgebildet ist, ein Graustufenbild des Raumbereichs (36) anhand von Signalamplituden des Reflexionssignals (24) zu bestimmen.

5. Vorrichtung nach Anspruch 4, **dadurch gekennzeichnet, dass** die Auswerte- und Steuereinheit (16) ferner dazu ausgebildet ist, das Graustufenbild und das Abbild der Bildaufnahmeeinheit (70) passgenau zu überlagern.

6. Vorrichtung nach einem der vorhergehenden Ansprüche, **dadurch gekennzeichnet, dass** die Strahlschwenkeinheit (22, 30, 54) einen zweiten Drehantrieb (30) aufweist, um das Sendesignal (18) um eine zweite, vorzugsweise horizontale Drehachse (32) zu drehen.

7. Vorrichtung nach Anspruch 6, **dadurch gekennzeichnet, dass** die Bildzellenzeile senkrecht zu der zweiten Drehachse (32) positionierbar ist.

8. Vorrichtung nach einem der vorhergehenden Ansprüche, **dadurch gekennzeichnet, dass** die erste und die zweite Drehachse (62, 32) einen Achsenschnittpunkt (64) definieren, und dass die Bildaufnahmeeinheit (70) eine optische Achse (108) besitzt, die zumindest wahlweise im Bereich des Achsenschnittpunktes (64) positionierbar ist.

9. Vorrichtung nach einem der vorhergehenden Ansprüche, **gekennzeichnet durch** einen in der Höhe verstellbaren Ständer (56) mit einer Höhenskalierung (58) zum genauen Positionieren der Bildaufnahmeeinheit (70).

10. Vorrichtung nach einem der vorhergehenden Ansprüche, **dadurch gekennzeichnet, dass** die Strahlschwenkeinheit (22, 30, 54) einen Drehspiegel (22) beinhaltet, der dazu ausgebildet ist, das Sendesignal (18) in verschiedene Raumrichtungen umzulenken, wobei die Bildaufnahmeeinheit (70) zumindest wahlweise im Bereich des Drehspiegels (22) positionierbar ist.

11. Vorrichtung nach einem der vorhergehenden Ansprüche, **gekennzeichnet durch** eine Gehäusestruktur mit zumindest zwei voneinander getrennten Gehäuseteilen (38, 40, 44, 46), und **durch** einen Halter (82) für die Bildaufnahmeeinheit (70), der lösbar mit zumindest einem Gehäuseteil (40, 46) verbunden ist.

12. Vorrichtung nach Anspruch 11, **dadurch gekennzeichnet, dass** der Halter (82) einen verschwenkbaren Arm (78) aufweist, an dem die Bildaufnahmeeinheit (70) angeordnet ist.

13. Vorrichtung nach Anspruch 11 oder 12, **dadurch gekennzeichnet, dass** der Halter (82) eine in etwa U-förmige Klammer (84) aufweist, um den Halter (82) auf das zumindest eine Gehäuseteil (40, 46) aufzustecken.

14. Vorrichtung nach einem der Ansprüche 11 bis 13, **dadurch gekennzeichnet, dass** die Bildaufnahmeeinheit (70) mit Hilfe des Halters (82) in eine Ebene verschwenkbar, die zwischen den zumindest zwei Gehäuseteilen (38, 40) liegt.

15. Verfahren zum dreidimensionalen Erfassen eines Raumbereichs (36), mit den Schritten:
Aussenden eines weitgehend strahlförmigen Sendesignals (18) zu einem Objektpunkt (20) in dem Raumbereich (36),
Empfangen eines Reflexionssignals (24) von dem Objektpunkt (20) und Bestimmen einer Entfernung zu dem Objektpunkt (20) anhand des Sendesignals (18) und des Reflexionssignals (24),
Ausrichten des Sendesignals (18) in unterschiedliche Raumrichtungen mit Hilfe einer Strahlschwenkeinheit (22, 30, 54), wobei die Strahlschwenkeinheit (22, 30, 54) einen ersten Drehantrieb (54) aufweist, um das strahlförmige Sendesignal (18) um eine erste, vorzugsweise vertikale Drehachse (62) zu drehen,
Aufzeichnen eines Abbildes des Raumbereichs (36) mit einer Bildaufnahmeeinheit (70), wobei die Bildaufnahmeeinheit (70) einen definierten Bildaufnahmebereich (106) besitzt, und wobei die Bildaufnahmeeinheit (70) mit der Strahlschwenkeinheit (22, 30, 54) gekoppelt wird, um den Bildaufnahmebereich (106) und das Sendesignal (18) auf eine Vielzahl gleicher Objektpunkte (20) auszurichten,
**dadurch gekennzeichnet, dass**
von einem Bildsensor (72), den die Bildaufnahmeeinheit (70) aufweist und der ein Zeilensensor ist, mit einer Vielzahl von zellenförmig nebeneinander angeordneten, eine Bildzellenzeile bildende Bildzellen (74) die Bildzellenzeile des Bildsensors (72) parallel zu der ersten Drehachse (62) positioniert wird, und
eine Drehgeschwindigkeit des Drehantrieb (54) an einen definierten Abstand angepasst wird, in welchem jeweils mehrere zueinander parallele, zur Aufnahme unterschiedlicher Farbkomponenten vorgesehene Bildzellenzeilen (72a, 72b, 72c) des Bildsensors (72) zueinander angeordnet sind, so dass die Bildaufnahmeeinheit (70) über jede der parallelen Bildzellenzeilen (72a, 72b, 72c) denselben Objektpunkt (20) aufnimmt.

## Claims

1. An apparatus for three-dimensional coverage of a spatial area (36), with
a) a distance meter for determining a distance to an object point (20) in the spatial area (36), wherein the distance meter comprises an emitter (12) for emitting a widely beam-shaped emitted signal (18) to the object point (20), a receiver (14) for receiving a reflected signal (24) from the object point (20), and an evaluation and control unit (16), being configured to determine the distance to the object point (20) by means of the emitted signal (18) and the reflected signal (24),
b) a beam sweeper unit (22, 30, 54) being configured to orient the emitted signal (18) in different spatial directions, wherein the beam sweeper unit (22, 30, 54) comprises a first rotary drive (54) for rotating the beam-shaped emitted signal (18) about a first, preferably vertical, axis of rotation (62), and
c) an image capturing unit (70) for recording an image of the spatial area (36), wherein the image capturing unit (70) has a defined image capturing region (106), and wherein the image capturing unit (70) is coupled to the beam sweeper unit (22, 30, 54) for orienting the image capturing region (106) and the emitted signal (18) towards the same object point (20),
**characterized in that**
d) the image capturing unit (70) comprises an image sensor (72) with a plurality of cellular image cells (74) arranged side by side in a line, which form an image cell line, wherein the image sensor (72) is a line sensor,
e) the image cell line of the image sensor (72) can be positioned parallel to the first axis of rotation (62), and
f) the image sensor (72) comprises several parallel image cell lines (72a, 72b, 72c) for capturing different color components, wherein the parallel image cell lines (72a, 72b, 72c) are spaced at a defined distance, and wherein the first rotary drive (54) has a rotational speed being adapted to the define distance **in that** the image capturing unit (70) captures the same object point (20) by means of each of the parallel image cell lines (72a, 72b, 72c).

2. The apparatus according to Claim 1, **characterized in that** the image capturing unit (70) is configured to record a colored optical image of the spatial area (36).

3. The apparatus according to Claim 1 or 2, **characterized in that** the image capturing unit (70) is configured to record a thermal image of the spatial area (36).

4. The apparatus according to one of the preceding Claims, **characterized in that** the evaluation and control unit (16) is further configured to determine a greyscale image of the spatial area (36) by means of the signal amplitudes of the reflected signal (24).

5. The apparatus according to Claim 4, **characterized in that** the evaluation and control unit (16) is further configured to accurately superimpose the greyscale image and the image of the image capturing unit (70).

6. The apparatus according to one of the preceding Claims, **characterized in that** the beam sweeper unit (22, 30, 54) comprises a second rotary drive (30) for rotating the beam-shaped emitted signal (18) about a second, preferably horizontal, axis of rotation (32),

7. The apparatus according to Claim 6, **characterized in that** the image cell line can be positioned perpendicular to the second axis of rotation (32).

8. The apparatus according to one of the preceding Claims, **characterized in that** the first and second axis of rotation (62, 32) define a point of intersection of the axes (64), and that the image capturing unit (70) has an optical axis (108) which can be positioned at least optionally in the region of the point of intersection of the axes (64).

9. The apparatus according to one of the preceding Claims, **characterized by** a height-adjustable stand (56) with a height scaling (58) for accurately positioning the image capturing unit (70).

10. The apparatus according to one of the preceding Claims, **characterized in that** the beam sweeper unit (22, 30, 54) includes a rotary mirror (22) being configured to deflect the emitted signal (18) into different spatial directions, wherein the image capturing unit (70) can be positioned at least optionally in the region of the rotary mirror (22).

11. The apparatus according to one of the preceding Claims, **characterized by** a housing structure with at least two separated housing parts (38, 40, 44, 46), and by a holder (82) for the image capturing unit (70), which is removably connected with at least one housing part (40, 46).

12. The apparatus according to Claim 11, **characterized in that** the holder (82) comprises a pivotal arm (78) on which the image capturing unit (70) is arranged.

13. The apparatus according to Claim 11 or 12, **characterized in that** the holder (82) comprises an approximately U-shaped clamp (84) for mounting the holder (82) onto the at least one housing part (40, 46).

14. The apparatus according to one of Claims 11 to 13, **characterized in that**, by means of the holder (82), the image capturing unit (70) is pivotal in a plane located between the at least two housing parts (38, 40).

15. Method for three-dimensional coverage of a spatial area (36), involving the steps of:
emitting a widely beam-shaped emitted signal (18) to an object point (20) in the spatial area (36),
receiving a reflected signal (24) from the object point (20) and determining the distance to the object point (20) by means of the emitted signal (18) and the reflected signal (24),
orienting the emitted signal (18) in different spatial directions by means of the beam sweeper unit (22, 30, 54), wherein the beam sweeper unit (22, 30, 54) comprises a first rotary drive (54) for rotating the beam-shaped emitted signal (18) about a first, preferably vertical, axis of rotation (62),
recording an image of the spatial area (36) by means of the image capturing unit (70), wherein the image capturing unit (70) has a defined image capturing region (106), and wherein the image capturing unit (70) is coupled to the beam sweeper unit (22, 30, 54) for orienting the image capturing region (106) and the emitted signal (18) towards a plurality of same object points (20),
**characterized in that**
an image cell line of an image sensor (72), comprised by the image capturing unit (70) and being a line sensor, with a plurality of cellular image cells (74) arranged side by side in a line and forming an image cell line, is positioned parallel to the first axis of rotation (62), and
a rotational speed of the rotary drive (54) is adapted to a defined distance at which several parallel image cell lines (72a, 72b, 72c) of the image sensor (72), for capturing different color components, are spaced, **in that** the image capturing unit (70) captures the same object point (20) by means of each of the parallel image cell lines (72a, 72b, 72c).

## Revendications

1. Dispositif pour le relèvement tridimensionnel d'une zone d'espace (36), avec
a) un télémètre pour déterminer une distance d'un point d'objet (20) dans la zone d'espace (36), où le télémètre possède un émetteur (12) pour émettre un signal d'émission pratiquement en forme de rayon (18) vers le point d'objet (20), un récepteur (14) pour recevoir un signal de réflexion (24) du point d'objet (20) et une unité de contrôle et d'évaluation (16) conformée pour déterminer la distance vers le point d'objet (20) sur la base du signal d'émission (18) et du signal de réflexion (24) ;
b) une unité de mouvement du rayon (22, 30, 54) conformée pour diriger le signal d'émission (18) en différentes directions d'espace, l'unité de mouvement du rayon (22, 30, 54) présentant un premier entraînement en rotation (54) pour faire tourner le signal d'émission en forme de rayon (18) autour d'un premier axe de rotation de préférence vertical (62), et
c) une unité d'acquisition d'image (70) pour enregistrer une reproduction de la zone d'espace (36), l'unité d'acquisition d'image (70) possédant une zone d'acquisition d'image définie (106) et étant couplée avec l'unité de mouvement du rayon (22, 30, 54) pour orienter la zone d'acquisition d'image (106) et le signal d'émission (18) sur le même point d'objet (20)
**caractérisé en ce que**
d) l'unité d'acquisition d'image (70) présente un capteur d'image (72) avec un grand nombre de cellules d'image disposées l'une à côté de l'autre en forme de cellules (74) qui forment une ligne de cellules d'image, le capteur d'image (72) étant un capteur linéaire ;
e) la ligne de cellules d'image du capteur d'image (72) est positionnable parallèlement au premier axe de rotation (62), et
f) le capteur d'image (72) possède plusieurs lignes de cellules d'image parallèles entre elles (72a 72b, 72b, 72c) pour la réception de composantes de couleur différentes, où les lignes de cellules d'image parallèles (72a 72b, 72b, 72c) à chaque fois sont arrangées à une distance définie l'une de l'autre, et où le premier entraînement en rotation (54) possède une vitesse de rotation qui est adaptée à la distance définie de telle manière que l'unité d'acquisition d'image (70) sur chacune des lignes de cellules d'image parallèles (72a 72b, 72b, 72c) acquiert le même point d'objet (20).

2. Dispositif selon la revendication 1, **caractérisé en ce que** l'unité d'acquisition d'image (70) est conformée pour enregistrer une reproduction optique colorée de la zone d'espace (36).

3. Dispositif selon la revendication 1 ou 2, **caractérisé en ce que** l'unité d'acquisition d'image (70) est conformée pour enregistrer une reproduction thermique de la zone d'espace (36).

4. Dispositif selon l'une des revendications précédentes, **caractérisé en ce que** l'unité de contrôle et d'évaluation (16) est en outre conformée pour déterminer une image de niveaux de gris de la zone d'espace (36) sur la base des amplitudes du signal de réflexion (24).

5. Dispositif selon la revendication 4, **caractérisé en ce que** l'unité de contrôle et d'évaluation (16) est en outre conformée pour superposer parfaitement l'image de niveaux de gris et la reproduction de l'unité d'acquisition d'image (70).

6. Dispositif selon l'une des revendications précédentes, **caractérisé en ce que** l'unité de mouvement du rayon (22, 30, 54) présente un second entraînement en rotation (30) pour faire tourner le signal d'émission (18) autour d'un second axe de rotation de préférence horizontal (32).

7. Dispositif selon la revendication 6, **caractérisé en ce que** la ligne de cellules d'image est positionnable verticalement par rapport au second axe de rotation (32).

8. Dispositif selon l'une des revendications précédentes, **caractérisé en ce que** le premier et le second axe de rotation (62, 32) définissent un point d'intersection d'axes (64), et que l'unité d'acquisition d'image (70) possède un axe optique (108) positionnable au moins au choix dans la zone du point d'intersection d'axes (64).

9. Dispositif selon l'une des revendications précédentes, **caractérisé par** un support réglable en hauteur (56) avec une échelle de hauteur (58) pour le positionnement précis de l'unité d'acquisition d'image (70).

10. Dispositif selon l'une des revendications précédentes, **caractérisé en ce que** l'unité de mouvement du rayon (22, 30, 54) comprend un miroir rotatif (22) conformé pour faire tourner le signal d'émission (18) dans des directions spatiales différentes, l'unité d'acquisition d'image (70) étant positionnable au moins au choix dans la zone du miroir rotatif (22).

11. Dispositif selon l'une des revendications précédentes, **caractérisé par** une structure de boîtier avec au moins deux parties du boîtier séparées l'une de l'autre (38, 40, 44, 46), et par un support (82) pour l'unité d'acquisition d'image (70) qui est lié de façon amovible avec au moins une partie du boîtier (40, 46).

12. Dispositif selon la revendication 11, **caractérisé en ce que** le support (82) présente un bras pivotant (78), sur lequel l'unité d'acquisition d'image (70) est disposée.

13. Dispositif selon la revendication 11 ou 12, **caractérisé en ce que** le support (82) présente un clamp en forme de U (84) pour enficher le support (82) sur au moins une partie du boîtier (40, 46).

14. Dispositif selon l'une des revendications 11 à 13, **caractérisé en ce que** l'unité d'acquisition d'image (70) à l'aide du support (82) est pivotante dans un plan qui se trouve entre les deux parties du boîtier (3 8, 40).

15. Procédé pour le relèvement tridimensionnel d'une zone d'espace (36), avec les phases suivantes :
Émission d'un signal d'émission essentiellement en forme de rayon (18) vers un point d'objet (20) dans la zone d'espace (36) ;
Réception d'un signal de réflexion (24) du point d'objet (20) et détermination d'une distance du point d'objet (20) sur la base du signal d'émission (18) et du signal de réflexion (24) ;
Orientation du signal d'émission (18) dans des directions spatiales différentes à l'aide d'une unité de mouvement du rayon (22, 30, 54), l'unité de mouvement du rayon (22, 30, 54) présentant un premier entraînement en rotation (54) pour faire tourner le signal d'émission en forme de rayon (18) autour d'un premier axe de rotation de préférence vertical (62) ;
Enregistrement d'une reproduction de la zone d'espace (36) avec une unité d'acquisition d'image (70), où l'unité d'acquisition d'image (70) possède une zone d'acquisition d'image définie (106), et où l'unité d'acquisition d'image (70) est couplée avec l'unité de mouvement du rayon (22, 30, 54) pour orienter la zone d'acquisition d'image (106) et le signal d'émission (18) sur un grand nombre de points d'objet égaux (20)
**caractérisé en ce que**
par un capteur d'image (72), que présente l'unité d'acquisition d'image (70) et qui est un capteur linéaire, avec un grand nombre de cellules d'image disposées l'une à côté de l'autre en forme de cellules et formant une ligne de cellules d'image (74), la ligne de cellules d'image du capteur d'image (72) est positionnée parallèlement au premier axe de rotation (62), et
une vitesse de rotation de l'entraînement en rotation (54) est adaptée à une distance définie, où à chaque fois plusieurs lignes de cellules d'image (72a 72b, 72b, 72c) du capteur d'image (72), prévues pour le relèvement de différentes composantes de couleur et parallèles entre elles, sont disposées entre elles de sorte que l'unité d'acquisition d'image (70) sur chacune des lignes de cellules d'image parallèles (72a 72b, 72b, 72c) relève le même point d'objet (20).
